# EUROPEAN PATENT APPLICATION

(11) **EP 2 806 540 A1**
(43) Date of publication of application: **26.11.2014**
(21) Application number: 13168764.2
(22) Date of filing: 22.05.2013
(51) Int. Cl.: H02K 5/128, B29C 70/08, B29C 70/20, H02K 3/47

(54) **Structural components**

(71) Applicant: GE Energy Power Conversion Technology Ltd, Rugby Warwickshire CV21 1BU (GB)
(72) Inventor: Greer, John Michael, Rugby, Warwickshire CV21 1PG (GB)
(74) Representative: Serjeants LLP

(57) **Abstract**

A structural component that experiences a changing magnetic field during use is described. The structural component can be a stator bore tube, a stator tooth or stator support, for example. A stator bore tube (1) is made of a multi-layered composite material with layers (2b, 2d) of unidirectional carbon fibre reinforced polymer (CFRP). The eddy current direction is along the axis of the stator bore tube (1). The carbon fibres in the CFRP layers (2b, 2d) are orientated along the circumferential (or 'hoop) direction of the stator bore tube (1).

## Description

### Technical Field

The present invention relates to structural components, and in particular to components that experience a changing magnetic field during use, e.g., stator bore tubes, stator teeth and other component parts of motors and generators, or similar structural components in magnetic resonance imaging (MRI) scanners, transformers and reactors.

### Summary of the Invention

The present invention provides a structural component that experiences a changing magnetic field during use, the changing magnetic field acting to induce eddy currents in the structural component along an eddy current direction, which can be problematic if not properly managed. The structural component comprises at least one layer of unidirectional carbon fibre reinforced polymer (CFRP) where the carbon fibres (or strands) are orientated along a direction that is substantially perpendicular to the eddy current direction.

The structural component has particular application within electrical machines (e.g., motors and generators, MRI scanners, transformers and reactors etc.) where components often have to be made of composite materials.

Eddy current losses within the CFRP layer are managed by orientating the carbon fibres along a direction that is substantially perpendicular to the eddy current direction.

It will be readily appreciated that in a unidirectional carbon fibre material the carbon fibres are substantially aligned along a single direction. (In a woven fibre material the fibres are aligned bi-directionally (along weft and warp directions) according to the weave pattern.) Unidirectional carbon fibre material will typically be provided as a fabric sheet (or ply) which is then combined with an epoxy resin (or other polymer) in a suitable manufacturing method to form the CFRP layer. Each CFRP layer can be made of one or more sheets of unidirectional carbon fibre material, each sheet having the same carbon fibre alignment. If the structural component further includes at least one layer of glass fibre reinforced polymer (GFRP) - see below - then this will typically also be made of one or more fabric sheets combined with the same epoxy resin (or other polymer). Each layer can include any suitable number of sheets. Each sheet can have any suitable surface density (g/m²), thickness etc., and incorporate any suitable type of carbon or glass fibre, as long as the fibres have the specified fibre orientation. It will generally be the case that sheets having thinner carbon fibres or strands will result in a more effective structural component because internal eddy currents within the carbon fibres will start to dominate as the diameter of the carbon fibres increases.

Depending on the thickness of the composite material, all of the layers may be cured at the same time. Where this is not possible then the composite material must (and can) be cured in stages. The structural component may be formed in substantially its finished shape. In other words, the sheets of carbon fibre material, and any optional glass fibre material, may be laid up on a suitably-shaped mandrel before the epoxy resin (or other polymer) is cured to form the finished structural component. When determining the shape of the finished structural component, allowance is typically made for its thermal expansion or contraction in use, for changes in stiffness etc.

The structural component may further comprise at least one unidirectional GFRP layer and/or at least one woven GFRP layer. In other words, the structural component may comprise layers of different composite material, some layers being intended to ensure that the structural component has the necessary mechanical properties such as strength and/or rigidity in a particular direction.

The structural component can be a stator bore tube of an electrical machine. In this case, the carbon fibres are preferably orientated substantially along the circumferential (or 'hoop') direction of the stator bore tube. If the structural component further comprises at least one unidirectional GFRP layer then the glass fibres are preferably orientated substantially along the axial direction of the stator bore tube to provide strength and rigidity to the structural component in that direction. The structural component can be a stator tooth or stator tooth support of a stator assembly of an electrical machine. In this case, the carbon fibres are preferably orientated substantially along the radial direction of the stator assembly. If the structural component further comprises at least one unidirectional GFRP layer then the glass fibres are preferably orientated substantially along the axial direction of the stator assembly. Either type of structural component may comprise at least one woven GFRP layer in addition to any unidirectional GFRP layer.

### Drawings

Figure 1 is a radial cross section view through part of a stator bore tube according to the present invention;
Figure 2 is an axial cross section view through the part of the stator bore tube of Figure 1; and
Figure 3 is an axial cross section view through part of a stator tooth according to the present invention.

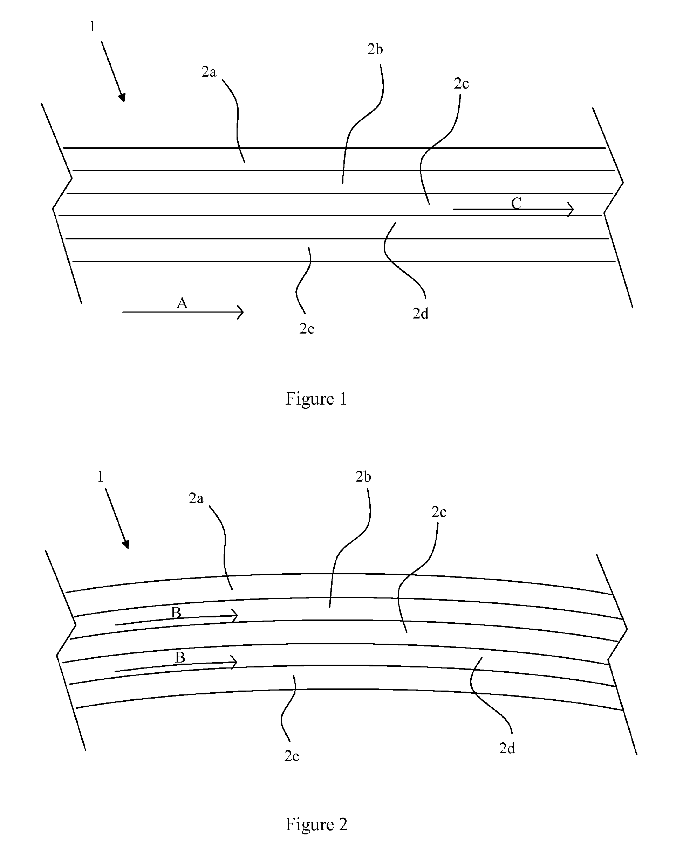

Figures 1 and 2 are cross sections through part of a stator bore tube 1 for a motor or generator. The stator bore tube 1 would be located in the airgap of the motor or generator to prevent coolant leakage from a liquid-cooled stator assembly. The stator bore tube 1 requires stiffness in the circumferential (or 'hoop') direction to cope with external pressure. It also requires stiffness in the axial direction.

The stator bore tube 1 will have an appropriate diameter and thickness. The stator bore tube 1 can be made significantly thinner than conventional tubes (e.g., those made entirely of GFRP) so the size of the airgap can be reduced.

It will be noted that Figures 1 and 2 are entirely schematic and are not intended to be indicative of the relative thickness of each layer, for example.

Carbon fibre is an electrical conductor and when the stator bore tube 1 is located in the airgap, the magnetic flux will cause current to flow in the stator bore tube and create eddy current losses. The magnitude of the losses will depend upon the magnitude of the current flowing in the stator bore tube 1 and its resistivity. The resistivity of the stator bore tube 1 depends upon many factors, including, for example, the ratio of carbon fibre to glass fibre, the orientation direction of the carbon fibres, and the contact between the carbon fibres. The eddy current direction would be along the axis of the stator bore tube 1 as indicated by arrow A.

The stator bore tube 1 is formed of a multi-layered composite material having the following construction:
- glass fibre reinforced polymer (GFRP) layer 2a - 1 sheet of 300 g/m² woven glass fibre material with weft and warp directions orientated at +/- 45 degrees to the axial direction
- carbon fibre reinforced polymer (CFRP) layer 2b - 2 sheets of 600 g/m² (or 8 sheets of 150 g/m²) unidirectional carbon fibre material with the carbon fibres orientated along the circumferential direction
- GFRP layer 2c - 1 sheet of 600 g/m² (or 2 sheets of 300 g/m²) unidirectional glass fibre material with the glass fibres orientated along the axial direction
- CFRP layer 2d - 2 sheets of 600 g/m² (or 8 sheets of 150 g/m²) unidirectional carbon fibre material with the carbon fibres orientated along the circumferential direction
- GFRP layer 2e - 1 sheet of 300 g/m² woven glass fibre material with weft and warp directions orientated at +/- 45 degrees to the axial direction

The woven GFRP layers 2a and 2e define the radially outer and inner layers of the stator bore tube 1, respectively.

It will be readily appreciated that eddy current losses are minimised in the stator bore tube 1 because the carbon fibres in the unidirectional CFRP layers 2b, 2d are orientated along the circumferential direction as shown by arrows B, which is perpendicular to the eddy current direction. However, stiffness in the axial direction of the stator bore tube 1 is maintained by the unidirectional GFRP layer 2c because the glass fibres are orientated along this direction as shown by arrow C.

The woven GFRP layers 2a, 2e provide the stator bore tube 1 with additional strength and rigidity.

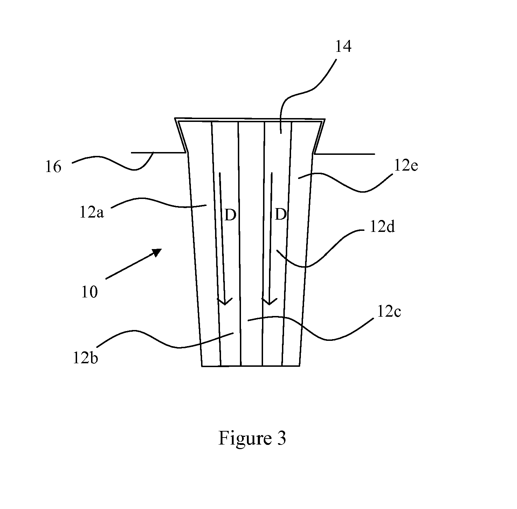

Figure 3 is a cross section through part of a stator tooth 10 for the stator assembly of a motor or generator. The stator tooth 10 includes a root portion 14 which is shaped to be received in a complementary opening in a radially inner surface of a stator support 16. In practice, a plurality of similar circumferentially-spaced stator teeth will be mounted to the stator support 16 to support the stator bars or windings (not shown).

It will be noted that Figure 3 is entirely schematic and is not intended to be indicative of the relative thickness of each layer, for example.

Each stator tooth 10 is formed of a multi-layered composite material having the following construction:
- glass fibre reinforced polymer (GFRP) layer 12a - 1 sheet of 300 g/m² woven glass fibre material with weft and warp directions orientated at +/- 45 degrees to the axial direction
- carbon fibre reinforced polymer (CFRP) layer 12b - 2 sheets of 600 g/m² (or 8 sheets of 150 g/m²) unidirectional carbon fibre material with the carbon fibres orientated along the circumferential direction
- GFRP layer 12c - 1 sheet of 600 g/m² (or 2 sheets of 300 g/m²) unidirectional glass fibre material with the glass fibres orientated along the axial direction
- CFRP layer 12d - 2 sheets of 600 g/m² (or 8 sheets of 150 g/m²) unidirectional carbon fibre material with the carbon fibres orientated along the circumferential direction
- GFRP layer 12e - 1 sheet of 300 g/m² woven glass fibre material with weft and warp directions orientated at +/- 45 degrees to the axial direction

It will be readily appreciated that eddy current losses are minimised in each stator tooth 10 because the carbon fibres in the unidirectional CFRP layers 12b, 12d are orientated along the radial direction as shown by arrows D, which is perpendicular to the eddy current direction. However, stiffness in the axial direction of each stator tooth 10 is maintained by the unidirectional GFRP layer 12c because the glass fibres are orientated along this direction.

The woven GFRP layers 12a, 12e provide each stator tooth 10 with additional strength and rigidity.

## Claims

1. A structural component that experiences a changing magnetic field during use, the changing magnetic field acting to induce eddy currents in the structural component along an eddy current direction, the structural component comprising at least one layer (2b, 2d; 12b, 12d) of unidirectional carbon fibre reinforced polymer where the carbon fibres are orientated along a direction that is substantially perpendicular to the eddy current direction.

2. A structural component according to claim 1, further comprising at least one layer (2c; 12c) of unidirectional glass fibre reinforced polymer.

3. A structural component according to claim 1 or claim 2, further comprising at least one layer (2a, 2e; 12a, 12e) of woven glass fibre reinforced polymer.

4. A structural component according to any preceding claim, being a stator bore tube (1) of an electrical machine, where the carbon fibres are orientated substantially along the circumferential direction of the stator bore tube (1).

5. A structural component according to claim 4, further comprising at least one layer of unidirectional glass fibre reinforced polymer (2c) where the glass fibres are orientated substantially along the axial direction of the stator bore tube (1).

6. A structural component according to any of claims 1 to 3, being a stator tooth (12) or stator tooth support of a stator assembly of an electrical machine, where the carbon fibres are orientated substantially along the radial direction of the stator assembly.

7. A structural component according to claim 6, further comprising at least one layer of unidirectional glass fibre reinforced polymer (12c) where the glass fibres are orientated substantially along the axial direction of the stator assembly.

## Amended claims

### Amended claims in accordance with Rule 137(2) EPC.

**1.** A structural component that experiences a changing magnetic field during use, the changing magnetic field acting to induce eddy currents in the structural component along an eddy current direction, the structural component comprising at least one layer (2b, 2d; 12b, 12d) of unidirectional carbon fibre reinforced polymer where the carbon fibres are orientated along a direction that is substantially perpendicular to the eddy current direction, and **characterised in that** the carbon fibres are orientated substantially along a radial direction of the structural component.

**2.** A structural component according to claim 1, further comprising at least one layer (2c; 12c) of unidirectional glass fibre reinforced polymer.

**3.** A structural component according to claim 1 or claim 2, further comprising at least one layer (2a, 2e; 12a, 12e) of woven glass fibre reinforced polymer.

**4.** A structural component according to any of claims 1 to 3, being a stator tooth (12) or stator tooth support of a stator assembly of an electrical machine.

**5.** A structural component according to claim 2, where the glass fibres are orientated substantially along an axial direction of the structural component.
